# EUROPÄISCHE PATENTANMELDUNG

(11) **EP 1 143 227 A2**
(43) Veröffentlichungstag der Anmeldung: **10.10.2001**
(21) Anmeldenummer: 01108095.9
(22) Anmeldetag: 30.03.2001
(51) Int. Cl.: G01F 23/02

(54) **Vorrichtung zum Anzeigen und Kontrollieren von Fluidzuständen**

(30) Priorität: 08.04.2000 DE 10017550
(71) Anmelder: FLUTEC FLUIDTECHNISCHE GERÄTE GMBH, 66280 Sulzbach/Saar (DE)
(72) Erfinder: Hubert, Gernot, 68775 Ketsch (DE); Käfer, Jürgen, 66538 Neunkirchen (DE)
(74) Vertreter: Bartels, Martin Erich Arthur

(57) **Zusammenfassung**

Die Erfindung betrifft eine Vorrichtung zum Anzeigen und Kontrollieren von Fluidzuständen mit mindestens einem Fluidanschluß (10), der in einen das Fluid aufnehmenden Sichtraum (16) mündet, der mit mindestens einer Anzeigeeinrichtung versehen ist und der einem Betrachter in einer Blickrichtung das Kontrollieren des Fluidzustandes ermöglicht. Dadurch, daß der Sichtraum (16) mit einem das Kontrollieren des Fluidzustandes erleichternden Hilfsmittel (38) zumindest teilweise versehen ist und daß das Hilfsmittel (38) in Blickrichtung des Betrachters hinter der Anzeigeeinrichtung derart angeordnet ist, daß eine Kontrasterhöhung erfolgt, sind bekannte Vorrichtungen dahingehend weiter verbessert, daß mit möglichst geringem Kostenaufwand die optische Kontrolle durch einen Betrachter deutlich erleichtert ist.

## Beschreibung

Die Erfindung betrifft eine Vorrichtung zum Anzeigen und Kontrollieren von Fluidzuständen mit mindestens einem Fluidanschluß, der in einen das Fluid aufnehmenden Sichtraum mündet, der mit mindestens einer Anzeigeeinrichtung versehen ist und der einem Betrachter in einer Blickrichtung das Kontrollieren des Fluidzustandes ermöglicht.

Dahingehende Vorrichtungen bezeichnet man in der Fachsprache in Abhängigkeit von ihrem jeweiligen Funktionszweck auch mit Flüssigkeitsstandanzeigegeräte, Fluidniveau-Überwachungseinrichtungen sowie mit Temperaturüberwachungs- und -Schaltgeräten. Bei Flüssigkeitsstandanzeigegeräten kann das Flüssigkeitsniveau durch ein elektrisches Schaltsignal kontrolliert werden. Dieses Schaltsignal kann als Warnmeldung oder zur Niveauregulierung verwendet werden. Das Medium in Form des Fluids, insbesondere in Form von Hydrauliköl, dringt dabei regelmäßig durch eine untere Anschlußbohrung in das Gerät ein und hebt im Gehäuse in Form eines durchsichtig gehaltenen Steigrohres, das eine Art Sichtraum bildet, einen Schwimmerkörper an. Der Schwimmerkörper nimmt nun das Niveau des Fluidmediums im Behälter, an den die Vorrichtung angeschlossen ist, ein. Sinkt das Niveau des Fluids wieder ab, so betätigt der Schwimmerkörper einen Schaltkontakt eines elektrischen Schaltkreises. In Abhängigkeit von dem gewünschten Schaltkreisverhalten kann der Schaltkontakt in der Art eines Schließers ausgebildet sein, bei dessen Betätigung ein Stromkreis geschlossen wird oder in der Art eines Öffners, der dann den Stromkreis unterbricht. Eine weitere Variante besteht darin, den Schaltkontakt als Wechsler auszubilden, der dann sowohl als Schließer als auch als Öffner eingesetzt werden kann. Unabhängig hiervon kann jedenfalls über den Schwimmerkörper ein Betrachter den Fluidzustand, hier in Form des Fluidniveaus, kontrollieren.

Bei dieser Art von Vorrichtungen zum Anzeigen und Kontrollieren von Fluidzuständen und bei solchen, die nur in der Art eines Schauglases die Überwachung des Fluidzustandes ermöglichen, beispielsweise in Form der Konsistenz des Fluids, seiner Farbe oder seiner Trübung (Verschmutzung), ist die Ablesbarkeit durch das vollständig lichtdurchlässige Schauglas erschwert, das auch aus einem durchsichtigen Kunststoffmaterial bestehen kann. Darüber hinaus gibt es auch noch Anzeige- und Kontrollvorrichtungen, die in ihrem Schauglas eine Temperaturanzeige aufnehmen, beispielsweise in Form eines üblichen Thermometers, wobei hier gleichfalls die Ablesemöglichkeit für das Thermometer erschwert ist, insbesondere, wenn das Fluid dessen Zustand anzuzeigen und zu kontrollieren ist, keine Trübung aufweist und ansonsten farblos gehalten ist.

Ausgehend von diesem Stand der Technik liegt der Erfindung die Aufgabe zugrunde, die bekannten Vorrichtungen dahingehend weiter zu verbessern, daß mit möglichst geringem Kostenaufwand die optische Kontrolle durch einen Betrachter deutlich erleichtert ist. Eine dahingehende Aufgabe löst eine Vorrichtung mit den Merkmalen des Anspruches 1 in seiner Gesamtheit.

Dadurch, daß gemäß dem kennzeichnenden Teil des Patentanspruchs 1 der Sichtraum mit einem das Kontrollieren des Fluidzustandes erleichternden Hilfsmittel zumindest teilweise versehen ist und daß das Hilfsmittel in Blickrichtung des Betrachters hinter der Anzeigeeinrichtung derart angeordnet ist, daß eine Kontrasterhöhung erfolgt, läßt sich, ebenso wie die Trübung des Fluids, auch seine Farbe und sein eingenommenes Niveau innerhalb der Vorrichtung für einen Betrachter leicht erfassen. Letzteres gilt insbesondere dann, wenn ein Schwimmerkörper für die Niveauanzeige eingesetzt wird. Auch bei Verwendung einer Temperaturanzeige, beispielsweise in Form eines Thermometers innerhalb des Sichtraumes, wird die Ablesbarkeit der Temperatur durch die Kontrasterhöhung für einen Betrachter oder Kontrolleur verbessert. Da das Hilfsmittel sich kostengünstig zur Verfügung stellen läßt, ist insgesamt die verbesserte Vorrichtung kostengünstig herstellbar.

Bei einer bevorzugten Ausführungsform der erfindungsgemäßen Vorrichtung ist vorgesehen, daß als Hilfsmittel zur Kontrasterhöhung Teile des den Sichtraum umgebenden, ansonsten durchsichtigen Wandmaterials mit einer die Durchsicht zumindest reduzierenden Hintergrundgestaltung versehen sind. Vorzugsweise kann dabei die Hintergrundgestaltung durch mindestens einen optisch verdichtenden Wandabschnitt des Wandmaterials erfolgen. Bei einer anderen vorzugsweisen Ausgestaltung erfolgt die Hintergrundgestaltung durch eine Einfärbung mindestens eines Wandabschnittes des Wandmaterials.

Bei einer weiteren, besonders bevorzugten Ausführungsform der erfindungsgemäßen Vorrichtung kann die Hintergrundgestaltung durch einen Farbauftrag an mindestens einem Wandabschnitt des Wandmaterials, vorzugsweise am Außenumfang desselben, erfolgen.

Bei einer besonders bevorzugten Ausführungsform der erfindungsgemäßen Vorrichtung ist vorgesehen, daß die Hintergrundgestaltung durch einen außenumfangsseitig an mindestens einem Wandabschnitt angeordneten Abdeckstreifen, der zumindest teilweise mit einer Selbstklebefolie versehen ist und/oder zumindest teilweise über eine Clipverbindung an dem Wandmaterial festlegbar ist. Auch kann vorzugsweise vorgesehen sein, die Hintergrundgestaltung aus verschiedenen der bisher beschriebenen Komponenten zusammenzusetzen.

Vorzugsweise ist des weiteren vorgesehen, daß der Clip der Clipverbindung aus einem Längsabschnitt eines rohrförmigen elastisch nachgiebigen Umfangteils gebildet ist, das der Außenkontur des Wandmaterials zumindest teilweise nachfolgt, und mit seinen freien, auf Abstand gehaltenen Längsrändern das Wandmaterial umfaßt. Dabei kann zwischen dem Clip und dem benachbart gegenüberliegenden Wandabschnitt der Abdeckstreifen als separates Bauteil angeordnet sein. Vorzugsweise ist jedoch der Clip selbst der Abdeckstreifen, der als Hilfsmittel der Kontrasterhöhung beim Ablesevorgang dient. Es hat sich insbesondere gezeigt, daß bei der Farbe "Weiß" sich eine gute Kontrastverstärkung ergibt, insbesondere wenn beispielsweise bei der Verwendung eines schwarz gehaltenen Schwimmerkörpers der Kontrast besonders deutlich ist. Sofern die eingesetzte Farbe oder das Material des Clip UV-beständig ist, ist eine Benutzung auch bei entsprechend starker Licht- oder Sonneneinstrahlung über lange Betriebsräume möglich.

Weitere vorteilhafte Ausführungsformen sind Gegenstand der Unteransprüche.

Im folgenden wird die erfindungsgemäße Vorrichtung anhand einer Ausführungsform nach der Zeichnung näher erläutert.
Es zeigen in prinzipieller und nicht maßstäblicher Darstellung die
- Fig. 1a, b: die erfindungsgemäße Vorrichtung in Frontansicht bzw. eine Seitendarstellung der erfindungsgemäßen Vorrichtung mit teilweise im Schnitt dargestellten Behälterwänden, an denen die Vorrichtung über eine Schraubverbindung festlegbar ist;
- Fig. 2: einen Schnitt längs der Linie I - I in Fig.1a;
- Fig.3 und 4: in Draufsicht sowie in Ansicht das als Clip ausgebildete Hilfsmittel zur Kontrasterhöhung gemäß der Darstellung nach der Fig. 2.

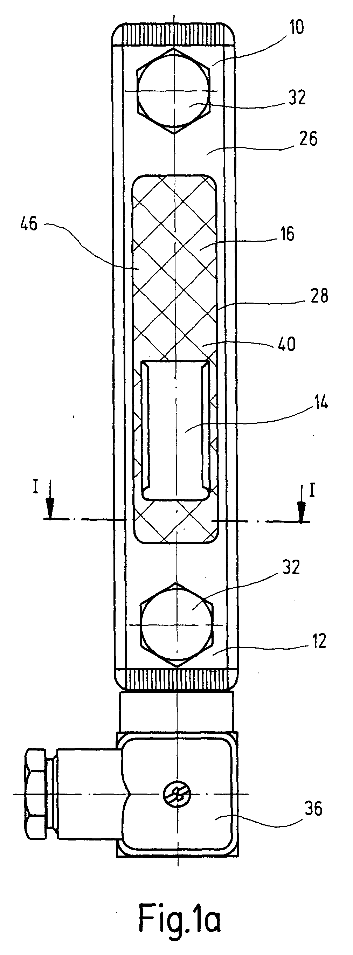

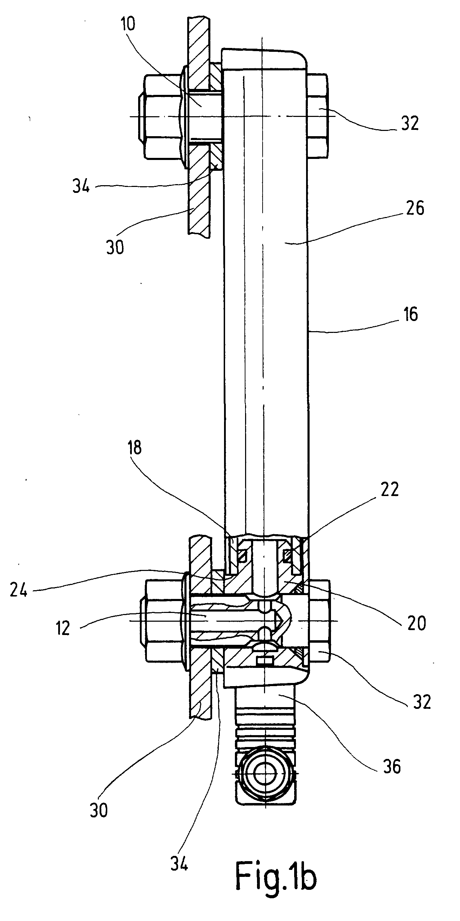

Die erfindungsgemäße Vorrichtung dient dem Anzeigen und/oder Kontrollieren von Fluiden. Hierfür kommen insbesondere Druckflüssigkeiten in Frage, wie Mineralöl nach DIN 51524, Teil I und II, Wasser-Öl-Emulsionen und synthetische Flüssigkeiten, wie Hydraulikflüssigkeiten auf Phosphatesterbasis. Die Vorrichtung weist, wie dies insbesondere die Fig.1a, 1b zeigen, zwei Fluidanschlüsse 10,12 auf, wobei der in Blickrichtung auf die Figuren gesehen untere Fluidanschluß 12 gemäß der Darstellung nach der Fig.1b näher dargestellt ist. Der demgegenüber obere Fluidanschluß 10 ist insofern vorteilhaft, als es über ihn vermieden ist, daß es unbeabsichtigt innerhalb der fluidführenden Teile der Vorrichtung zu einem Unterdruck oder Vakuum kommen kann, was die Längsverfahrbarkeit eines Schwimmerkörpers 14 beeinträchtigen könnte. Der Schwimmerkörper 14 ist abhängig vom Fluidniveau (vgl. Fig.1a) innerhalb eines Sichtraumes 16 längsverfahrbar geführt. Sofern es sich bei der Vorrichtung um eine Fluidstandskontrollanzeige handelt, dient der Schwimmerkörper 14 als Anzeigeeinrichtung der Vorrichtung, der einem Betrachter das Kontrollieren des Fluidzustandes innerhalb der Vorrichtung ermöglicht.

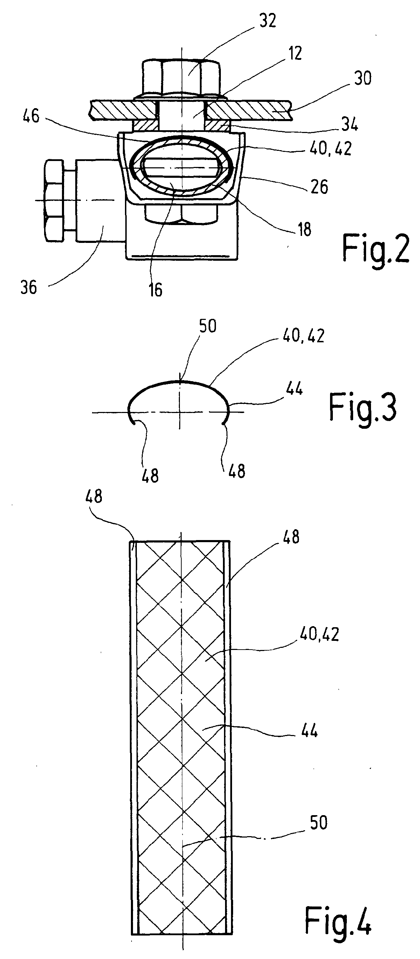

Der Sichtraum 16 ist von einem Wandmaterial 18 umgeben, das vorzugsweise aus einer durchsichtigen Kunststoffhülle gebildet ist, welche gegenüber den eingesetzten hydraulischen Medien als Fluid resistent ist. Des weiteren bildet das Wandmaterial 18, wie dies insbesondere die Fig.2 zeigt, einen elliptischen Querschnitt aus. Das derartige Wandmaterial 18 bildet mithin eine elliptische Sichtröhre aus, die zu ihren beiden Enden hin offen ist und über elliptische Abstützteile 20 der Vorrichtung gehalten wird. In der Fig.1b ist die dahingehende Abstützstelle im Umfang des unteren Abstützteils 20 gezeigt. Um eine fluiddichte Verbindung zwischen jeweiligem Abstützteil 20 und dem zugeordneten Wandmaterial 18 des Sichtraumes 16 herzustellen, weist das jeweilige Abstützteil außenumfangsseitig einen O-Dichtring 22 auf. Ferner bilden die beiden Abstützteile 20 ringartige Anlageflansche 24 aus, auf der sich die randseitigen Enden des Wandmaterials 18 des Sichtraumes 16 abstützen können. Zum Schutz des Sichtraumes 16 und der sonstigen Vorrichtung weist diese ein Gehäuseteil 26 auf in der Art eines U-förmigen Schutzbügelteils der den Sichtraum 16 mit seinem durchsichtigen Wandmaterial 18 nach außen hin übergreift. Entlang der vorderen Stirnseite weist das Gehäuseteil 26 eine rechteckförmige Ausnehmung 28 auf, so daß die derart freigelassene Stelle des Sichtraumes 16 für einen Betrachter in Erscheinung tritt. Ferner ist über die dahingehende Ausnehmung 28 der Schwimmerkörper 14 als Anzeigeeinrichtung der Vorrichtung beobachtbar.

Die in den Fig. 1a und 1 b gezeigte Vorrichtung ist zum direkten Anbau an einen Druckflüssigkeitsbehälter, wie einen Tank od.dgl., konzipiert, wobei in der Darstellung nach der Fig.1b nicht der gesamte Behälter, sondern nur eine Behälterwand 30 der Einfachheit halber teilweise dargestellt ist. Des weiteren sind die beiden Hohlschrauben 32, die dem Befestigen der Vorrichtung an der Behälterwand 30 dienen sowie Bestandteile des oberen und unteren Fluidanschlusses 10 bzw. 12 sind, über Ringbehälterdichtungen 34 mit der Behälterwand 30 dichtend verbunden. Die dahingehende Ausgestaltung ist im Stand der Technik in dieser Art bekannt, so daß an dieser Stelle hierauf nicht mehr näher detailliert eingegangen wird.

Des weiteren weist die Vorrichtung eine nicht näher dargestellte elektrische Schalteinrichtung auf mit einem Schaltkontakt, beispielsweise in Form eines sog. Reedschalters. Der dahingehende Reedschalter ist von einem Magneten (nicht dargestellt) im Schwimmerkörper 14 ansteuerbar bzw. schaltbar. In Abhängigkeit der Ausbildung des Reedschalters und mithin der Schalteinrichtung kann diese als Öffner, Schließer oder Wechsler eingesetzt werden. Neben einer Warnfunktion, beispielsweise bei einem ungewollten zu starken Absinken des Fluidniveaus, läßt sich das Schaltsignal auch zur Niveauregulierung einsetzen, beispielsweise indem dann die Schalteinrichtung eine Nachfülleinrichtung, beispielsweise in Form einer Hydropumpe od.dgl., für den Behälter (Tank) ansteuert. Hierfür weist die Vorrichtung auf ihrer Unterweise eine elektrische Steckeranordnung 36 auf, beispielsweise in Form eines Winkelsteckers, der die elektrische Schaltverbindung zwischen dem Reedschalter und einer nicht näher dargestellten Schalt- oder Überwachungseinrichtung herstellt. Um mit der dahingehenden Flüssigkeitsstandanzeige auch eine Flüssigkeitsstandkontrolle zu erreichen, ist, wie bereits dargelegt, der Sichtraum 16 über die rechteckförmige Ausnehmung 28 des Gehäuseteils 26 durchsichtig ausgeführt, um derart einem Betrachter oder Beobachter die Sichtkontrolle zu ermöglichen. Auch die dahingehende Schaltanordnung ist dem Grunde nach bekannt, so daß an dieser Stelle hierauf nicht mehr näher eingegangen wird.

Um die beschriebene Ablese- und Kontrollarbeit für einen Betrachter, beispielsweise in Form eines Wartungsfachmanns od.dgl., zu erleichtern, sieht die erfindungsgemäße Vorrichtung vor, daß der Sichtraum 16 mit einem das Kontrollieren des Fluidzustandes erleichternden Hilfsmittel 38 zumindest teilweise insofern versehen ist, als die rechteckförmige Ausnehmung 28 des Gehäuseteils 26 dem Betrachter die dahingehende Einsichtnahme auf die Anzeigeeinrichtung in Form des Schwimmerkörpers 14 und mithin auf die Niveaulage des Fluids (nicht dargestellt) freigibt. Das Hilfsmittel 38 ist dabei derart angeordnet, daß in Blickrichtung oder Ableserichtung des Betrachters hinter der Anzeigeeinrichtung in Form des Schwimmerkörpers 14 dieses derart angeordnet ist, daß eine deutliche Kontrasterhöhung im Hinblick auf den Ablesevorgang erfolgt. Als Hilfsmittel 38 zur Kontrasterhöhung dient ein Clip 40, wie er in Draufsicht und in Vorderansicht nach den Fig.3 bzw. 4 näher dargestellt ist.

Der Clip 40 bildet eine Art Abdeckstreifen 42 aus undurchsichtigem Material aus und weist vorzugsweise eine weiße Farbe auf, die wiederum vorzugsweise UV-beständig ist. Der Clip 40 ist ferner aus einem Längsabschnitt eines rohrförmigen, elastisch nachgiebigen Umfangteils 44, vorzugsweise aus einem entsprechenden Kunststoffmaterial, gebildet, das der in Blickrichtung auf die Fig.2 gesehen hinteren Außenkontur des Wandmaterials 18 nachfolgt, das den Sichtraum 16 umgibt. Damit der Clip 40 die Clipverbindung mit dem hinteren Wandabschnitt 46 des Wandmaterials 18 eingehen kann, weist dieser zwei vorstehende Schnapp- oder Klemmteile 48 auf, die im Hinblick auf die Elastizität des eingesetzten Kunststoffmaterials für den Clip 40 um die Cliplängsachse 50, die eine Art Gelenklinie ausbildet, voneinander wegschwenkbar sind, wobei im Hinblick auf das elastische Verhalten des Kunststoffmaterials automatisch durch Rückstellung die Klemmlage eingenommen wird, bei der der Kontrastclip 40, wie in der Fig.2 dargestellt, das Wandmaterial 18 des Sichtraumes 16 umfaßt, in dem die beiden Schnapp- oder Klemmteile 48 ein Stück weit den vorderen Wandabschnitt des Wandmaterials 18 mit umfassen.

Um eine saubere Anlage für die Clipverbindung zu gewährleisten, ist darüber hinaus die Grundkontur des Clip in seiner Ausgangslage dem elliptischen Querschnittsprofil des Wandmaterials 18 nachempfunden. Die Längenausdehnung des Clip 40 ist derart gewählt, daß er vorzugsweise den gesamten Sichtraum 16 von seiner Rückseite her umfaßt zwischen den beiden Endlagen des Wandmaterials 18 an der Übergangsstelle zu den ringartigen Anlageflanschen 24 der Abstützteile 20. Es genügt aber auch, eine Clipverbindung nur im Bereich des beobachtbaren Sichtraumes 16 herzustellen, wie sich dies aus der Fig. 1a ergibt. Da die Hintergrundfarbe des Clip 40 weiß gewählt ist, ist eine sehr starke Kontrasterhöhung für den Betrachter gegeben, was insbesondere dann eine Rolle spielt, wenn das Fluid nahezu farblos und mithin klar ist. So ergibt sich zum einen eine verbesserte Ablesbarkeit der Niveauanzeige über den Schwimmerkörper 14 selbst als auch eine Kontrolle über den Trübungsgrad und/oder den Farbzustand des eingesetzten Fluids. Die in den Fig.1a und 4 gezeigte Schraffur für den Clip 40 soll nur einen Hinweis für die durchgeführte Hintergrundgestaltung geben, um die Funktion des eingesetzten Hilfsmittels 38 besser zu verdeutlichen. Des weiteren kann zur Kontrasterhöhung auch vorgesehen sein, daß der Schwimmerkörper 14 eine Farbe aufweist, die sich deutlich von der Farbe des Hilfsmittels 38, insbesondere in Form des Clip 40, abhebt. Besonders vorteilhaft bei der angesprochenen Clipverbindung ist es, daß der Clip 40 bei bereits ausgelieferten Fluidstandskontrollanzeigen nachrüstbar ist, so daß auch bereits ausgelieferte Vorrichtungen in der Ablesbarkeit verbessert werden können.

Demgegenüber sind bei der Erstausrüstung der Vorrichtung auch noch andere alternative Ausführungsformen denkbar, die im folgenden skizziert werden. So können als Hilfsmittel 38 zur Kontrasterhöhung Teile des den Sichtraum 16 umgebenden, ansonsten durchsichtigen Wandmaterials 18 mit einer die Durchsicht zumindest reduzierenden Hintergrundgestaltung versehen sein, beispielsweise, indem das rückwärtige Wandmaterial aus einem dichter gepackten Kunststoffmaterial besteht als das vordere vollständig durchsichtige Wandmaterial 18. Die Hintergrundgestaltung wird dann also durch einen optisch verdichtenden hinteren Wandabschnitt 46 des Wandmaterials 18 gebildet. Des weiteren kann die Hintergrundgestaltung durch eine Einfärbung mindestens des hinteren Wandabschnittes 46 des Wandmaterials 18 erfolgen. Die Hintergrundgestaltung läßt sich auch durch einen Farbauftrag, beispielsweise durch eine Lackierschicht, vorzugsweise am Außenumfang des hinteren Wandabschnittes 46 des Wandmaterials 18 vornehmen. Des weiteren ist es auch möglich, den Abdeckstreifen 42 beispielsweise in Form eines Papier- oder Kunststoffstreifens zwischen einem durchsichtigen Clip 40 und dem Außenumfang des hinteren Wandabschnittes 46 des Wandmaterials 18 einzulegen. Neben der beschriebenen Clipverbindung wäre es hier auch möglich, den Abdeckstreifen 42 in der Art einer Selbstklebefolie, die auch wieder ablösbar ist, an dem hinteren Wandabschnitt 46 zu befestigen. Dabei können die angesprochenen Hintergrundgestaltungen auch sich aus verschiedenen Komponenten zusammensetzen. Des weiteren braucht die farbliche Gestaltung zur Kontrasterhöhung auch nicht durchgehend zu erfolgen, sondern könnte gitter- oder strukturmäßig unterbrochen sein. Ferner kann in Abhängigkeit der Anforderungen an die Kontrasterhöhung auch nur teilweise eine Hintergrundgestaltung bezogen auf den beobachtbaren Sichtraum 16 erfolgen. Bei Wahl einer weißen Lackierung als Hintergrundgestaltung ist jedoch gegebenenfalls die Medienbeständigkeit nicht derart gut als bei der beschriebenen Kunststoff-Clipverbindung. Ferner würde das Anbringen einer Lackierung im Nachrüstfall Probleme aufwerfen, beispielsweise im Hinblick auf die benötigte Trockenzeit für den jeweils eingesetzten Lack oder das verwendete Farbmaterial.

Anstelle des Flüssigkeitsstandanzeigers mittels des Schwimmerkörpers 14 ist es auch möglich, in der Art eines Sicht- oder Schauglases eine Fluidniveaubestimmung über das Niveau selbst ohne Schwimmerkörper 14 vorzunehmen. Die dahingehende Anordnung kommt insbesondere dann in Frage, wenn nicht verlangt wird, daß über einen Schwimmerkörper 14 eine elektrische Schalteinrichtung angesteuert wird. Das dahingehende Schauglas erlaubt auch eine Ablesbarkeit der Trübung und/oder der Farbe des Fluids sowie Aussagen über den Verschmutzungszustand und bildet derart die Anzeigeeinrichtung aus. Die Vorrichtung kann auch in eine Temperaturanzeige umgebaut werden, wobei dann an die Stelle des Schwimmerkörpers 14 eine Temperaturmeßeinrichtung (nicht dargestellt) tritt, beispielsweise in Form eines einfachen Thermometers, wobei dessen Skalierung über die Hintergrundausgestaltung gleichfalls bei entsprechender Kontrasterhöhung verbessert werden kann. Bei einer nicht näher dargestellten Ausführungsform ist es auch möglich, mit nur einer Anzeige- und Kontrollvorrichtung über mehrere miteinander in Fluidverbindung stehende Schaugläser eine Ablesung von Niveau und/oder Temperatur und/oder Position eines Schwimmerkörpers und/oder einer Aussage über die Konsistenz und/oder über das Aussehen und/oder über das Fluidniveau des Fluids zu erhalten.

## Patentansprüche

1. Vorrichtung zum Anzeigen und Kontrollieren von Fluidzuständen mit mindestens einem Fluidanschluß (10), der in einen das Fluid aufnehmenden Sichtraum (16) mündet, der mit mindestens einer Anzeigeeinrichtung versehen ist und der einem Betrachter in einer Blickrichtung das Kontrollieren des Fluidzustandes ermöglicht, **dadurch gekennzeichnet, daß** der Sichtraum (16) mit einem das Kontrollieren des Fluidzustandes erleichternden Hilfsmittel (38) zumindest teilweise versehen ist und **daß** das Hilfsmittel (38) in Blickrichtung des Betrachters hinter der Anzeigeeinrichtung derart angeordnet ist, **daß** eine Kontrasterhöhung erfolgt.

2. Vorrichtung nach Anspruch 1, **dadurch gekennzeichnet, daß** als Hilfsmittel (38) zur Kontrasterhöhung Teile des den Sichtraum (16) umgebenden, ansonsten durchsichtigen Wandmaterials (18) mit einer die Durchsicht zumindest reduzierenden Hintergrundgestaltung versehen sind.

3. Vorrichtung nach Anspruch 2, **dadurch gekennzeichnet, daß** die Hintergrundgestaltung durch mindestens einen optisch verdichteten Wandabschnitt (46) des Wandmaterials (18) erfolgt.

4. Vorrichtung nach Anspruch 2, **dadurch gekennzeichnet, daß** die Hintergrundgestaltung durch eine Einfärbung mindestens eines Wandabschnittes (46) des Wandmaterials (18) erfolgt.

5. Vorrichtung nach Anspruch 2, **dadurch gekennzeichnet, daß** die Hintergrundgestaltung durch einen Farbauftrag an mindestens einem Wandabschnitt (46) des Wandmaterials (18), vorzugsweise am Außenumfang des Wandmaterials (18), erfolgt.

6. Vorrichtung nach Anspruch 2, **dadurch gekennzeichnet, daß** die Hintergrundgestaltung durch einen außenumfangsseitig an mindestens einem Wandabschnitt (46) angeordneten Abdeckstreifen (42) erfolgt, der zumindest teilweise mit einer Selbstklebefolie versehen ist und/oder zumindest teilweise über eine Clipverbindung an dem Wandmaterial (18) festlegbar ist.

7. Vorrichtung nach einem der Ansprüche 3 bis 6, **dadurch gekennzeichnet, daß** die Hintergrundgestaltung aus verschiedenen Komponenten gemäß den Merkmalen nach den Ansprüchen 3 bis 6 zusammensetzbar ist.

8. Vorrichtung nach Anspruch 6, **dadurch gekennzeichnet, daß** der Clip (40) der Clipverbindung aus einem Längsabschnitt eines rohrförmigen, elastisch nachgiebigen Umfangteils (44) gebildet ist, das der Außenkontur des Wandmaterials (18) zumindest teilweise nachfolgt und mit seinen freien, auf Abstand gehaltenen Längsrändern (48) das Wandmaterial (18) teilweise umfaßt.

9. Vorrichtung nach Anspruch 8, **dadurch gekennzeichnet, daß** zwischen Clip (40) und dem benachbart gegenüberliegenden Wandabschnitt (46) der Abdeckstreifen (42) als separates Bauteil angeordnet ist.

10. Vorrichtung nach Anspruch 8, **dadurch gekennzeichnet, daß** der Clip (40) selbst den Abdeckstreifen (42) ausbildet.

11. Vorrichtung nach einem der Ansprüche 2 bis 9, **dadurch gekennzeichnet, daß** das Wandmaterial (18) eine durchsichtige Glas- oder Kunststoffhülle ausbildet mit vorzugsweise elliptischem Querschnitt.

12. Vorrichtung nach einem der Ansprüche 1 bis 11, **dadurch gekennzeichnet, daß** die jeweilige Anzeigeeinrichtung aus einem Schwimmerkörper (14) und/oder aus einer Temperaturerfassungseinrichtung, insbesondere aus einem Thermometer, gebildet ist und/oder einer Aussage über die Konsistenz und/oder über das Aussehen und/oder über einen Niveauzustand des Fluids erlaubt.
